# EUROPÄISCHE PATENTSCHRIFT

(11) **EP 0 551 873 B1**
(45) Veröffentlichungstag und Bekanntmachung des Hinweises auf die Patenterteilung: **27.09.1995**
(21) Anmeldenummer: 93100381.8
(22) Anmeldetag: 13.01.1993
(51) Int. Cl.: F16B 37/08, F16L 3/22

(54) **Kunststoffbefestigungselement zum Aufdrücken auf einen Gewindebolzen**
Plastic fastener for placing on a threaded bolt
Attache en plastique pour l'application sur un boulon fileté

(30) Priorität: 16.01.1992 DE 4200953
(43) Veröffentlichungstag der Anmeldung: 21.07.1993
(73) Patentinhaber: A. Raymond & Cie, F-38028 Grenoble-Cédex (FR)
(72) Erfinder: Moretti, Erminio, F-38000 Grenoble (FR)
(74) Vertreter: Kirchgaesser, Johannes, Dipl.-Ing.

(56) Entgegenhaltungen:
- DE-C- 3 615 488
- DE-U- 8 529 669
- GB-A- 2 197 905

## Beschreibung

Die Erfindung bezieht sich auf ein Kunststoffbefestigungselement, welches zum Aufdrücken auf einen Gewindebolzen ausgebildet und beispielsweise zur Befestigung von länglichen Körpern wie Rohre oder Kabel an Karosserieblechen von Kraftfahrzeugen bestimmt ist.

Das Befestigungselement besteht hierbei aus einem Haltekörper mit einem im montierten Zustand den Gewindebolzen koaxial umgebenden Durchgangsloch sowie aus einer in das Durchgangsloch einsteckbaren Befestigungshülse, deren Innenwand in bekannter Weise zur klemmenden Befestigung am Gewindebolzen ausgebildet ist. Die Befestigungshülse ist ferner mit einem Kopfteil versehen, das sich bei eingedrückter Befestigungshülse auf dem Rand des Durchgangslochs abstützt und zu diesem in axialer Richtung lösbar gehalten wird.

Ein derartiges Befestigungselement ist beispielsweise aus DE 36 15 488 C2 bekannt und dient dort zur Halterung von Kabeln am Karosserieblech eines Kraftfahrzeugs. Um das Befestigungselement im Bedarfsfall leicht von dem Trägerblech lösen zu können, ist die Befestigungshülse im Durchgangsloch leicht drehbar gelagert und gegen axiale Verschiebung gesichert, so daß sich das Befestigungselement beim Aufdrehen der Befestigungshülse vom Gewindebolzen mühelos abheben läßt.

Die leichte Drehbarkeit der Befestigungshülse ist zwar für den Demontagefall ein Vorteil, doch stellt sie, wenn das Befestigungselement Vibrationen ausgesetzt ist, gleichzeitig auch einen Nachteil dar, weil die Befestigungshülse sich als Folge der Vibrationen von selbst aufdrehen kann. Dieser Selbstlöseeffekt ließe sich zwar dadurch vermeiden, daß die Befestigungshülse gegenüber dem Durchgangsloch maßlich so abgestimmt würde, daß die Hülse sich nur unter großem Kraftaufwand drehen ließe. In diesem Fall würde das Losdrehen der Hülse praktisch jedoch unmöglich gemacht, weil die zunächst klemmend am Gewindebolzen anliegenden Innenwandteile der Befestigungshülse ausleiern würden und dann an den Gewindegängen des Gewindebolzens keinen Halt mehr fänden.

Aufgabe der Erfindung ist es daher, das Befestigungselement so zu gestalten, daß ein selbsttätiges Losdrehen der Befestigungshülse unter dem Einfluß von Vibrationen absolut sicher vermieden wird, und gleichzeitig die leichte Demontierbarkeit erhalten und die Wiederverwendung der demontierten Teile gewährleistet bleibt.

Diese Aufgabe wird nach der vorliegenden Erfindung dadurch gelöst, daß die Befestigungshülse zum Haltekörper im aufgedrückten Zustand mittels sich an Vorsprüngen des Haltekörpers abstützender, radial abstehender Ansätze gegen Verdrehung gesichert ist, wobei auf dem Kopfteil mittig ein Ansatz mit mindestens einer achsparallelen Abflachung angeformt ist und die verdrehsichere Verbindung zwischen Befestigungshülse und Haltekörper durch eine Verschlußkappe bewirkt wird, die mit einer dem Ansatz entsprechenden Aussparung versehen und über Rastmittel zum Haltekörper undrehbar festlegbar ist.

Die für die Verdrehsicherung zweckmäßigerweise vorgesehenen baulichen Maßnahmen sind in den Unteransprüchen angegeben und sollen nachfolgend anhand eines in den Figuren dargestellten Ausführungsbeispiels der Erfindung näher erläutert werden. Es zeigt
- Fig. 1: einen Haltekörper in Vorderansicht,
- Fig. 2: den Haltekörper in Draufsicht,
- Fig. 3: einen Schnitt durch das Durchgangsloch gemäß Linie III - III in Figur 1,
- Fig. 4: die Befestigungshülse mit Kopfteil, teilweise geschnitten,
- Fig. 5: die Verschlußkappe im Schnitt gemäß Schnittlinie V - V in Figur 6,
- Fig. 6: die Verschlußkappe in Draufsicht,
- Fig. 7: einen Schnitt durch die Befestigungshülse mit angespritzter Verschlußkappe beim Einführen in das Durchgangsloch des Haltekörpers,
- Fig. 8: die Befestigungshülse mit aufgedrückter Verschlußkappe nach der Verankerung im Durchgangsloch im Schnitt nach Linie VIII - VIII in Figur 9,
- Fig. 9: der mit der Befestigungshülse zusammengefügte Haltekörper in Vorderansicht,
- Fig. 10: der mit Rohrleitungen bestückte Haltekörper mit Aufnahmeöffnungen nach oben vor dem Aufdrücken auf den Gewindebolzen,
- Fig. 11: das gleiche Bild im Schnitt gemäß Linie XI - XI in Figur 10 beim Aufdrücken auf den Gewindebolzen,
- Fig. 12: das gleiche Schnittbild wie Figur 11 nach dem Aufdrücken auf den Gewindebolzen,
- Fig. 13: das gleiche Schnittbild wie Figur 12 mit gelöster Verschlußkappe vor dem Losdrehen der Befestigungshülse,
- Fig. 14: das gleiche Schnittbild wie Figur 13 beim Losdrehen der Befestigungshülse,
- Fig. 15: das gleiche Schnittbild beim Wiedereinsetzen der Befestigungshülse in das Durchgangsloch und
- Fig. 16: das Halteteil wie in Figur 10, wobei jedoch die Aufnahmeöffnungen für die Rohrleitungen nach unten gerichtet sind.

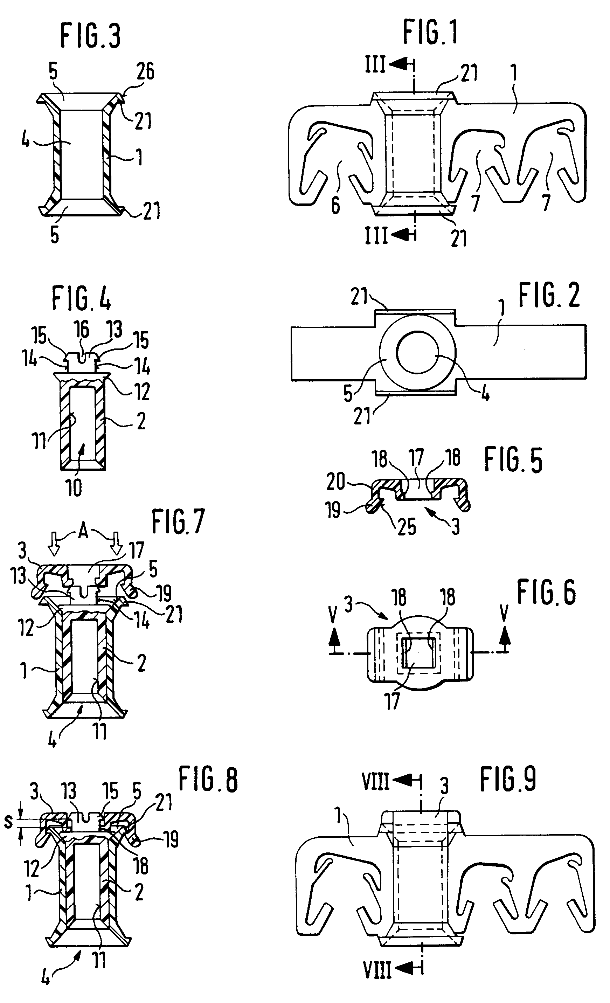

Das in den Figuren dargestellte Kunststoffbefestigungselement besteht aus einem Haltekörper 1 (Fig. 1 - 3), einer Befestigungshülse 2 (Fig. 4) und einer Verschlußkappe 3 (Fig. 5 u. 6), die mit der Befestigungshülse 2 vorzugsweise einstückig vergossen, d.h. mit abreißbaren Anspritzstellen verbunden ist (Fig. 7).

Der Haltekörper 1 ist mit einem Durchgangsloch 4 versehen, das an beiden Enden eine trichterförmige Erweiterung 5 aufweist. Beiderseits des Durchgangsloches 4 sind Haltebereiche 6 und 7 zur Aufnahme von Rohrleitungen 22, Kabeln 23 oder dergleichen langgestreckter Körper vorgesehen, welche mittels des Befestigungselements auf einem an einer Trägerplatte 8 ansitzenden Gewindebolzens 9 befestigt werden sollen (Fig. 10 - 12).

Die Befestigungshülse 2 besitzt ein Loch 10 mit Innenwänden 11, die in bekannter Weise zur klemmenden Befestigung am Gewindebolzen 9 ausgebildet sind. Die Befestigungshülse 2 ist ferner mit einem sich konisch erweiternden Kopfteil 12 versehen, wetches sich beim Einstecken der Befestigungshülse 2 in das Durchgangsloch 4 auf der trichterförmigen Erweiterung 5 abstützt.

Auf dem Kopfteil 12 befindet sich in dessen Mitte ein im Querschnitt rechteckiger Ansatz 13 mit Abflachungen 14, wobei an zwei einander gegenüberliegenden Abflachungen 14 nach außen abstehende Rastkanten 15 vorgesehen sind. Der Ansatz 13 ist ferner durch einen mittig und parallel zu den Rastkanten 15 verlaufenden Schlitz 16 eingeschnitten, so daß die Rastkanten 15 elastisch etwas zusammendrückbar sind.

Die Verschlußkappe 3 ist ihrerseits mit einer dem Ansatz 13 entsprechenden Aussparung 17 versehen, wobei parallel zu den Rastkanten 15 zwei nach innen abgewinkelte Kanten 18 einen Engpaß bilden, durch den die Rastkanten 15 unter elastischem Zusammenfedern der Kanten 15 bzw. Auseinanderfedern der Kanten 18 hindurchgedrückt werden. Nach Passieren des Engpasses federn die Rastkanten 15 und Kanten 18 wieder in ihre ursprüngliche Lage zurück, so daß zwischen dem Kopfansatz 13 und der Verschlußkappe 3 eine unlösbare Verbindung entsteht.

Die Verschlußkappe 3 besitzt ferner zwei diametral gegenüberliegende Rasthaken 19, die mit der Verschlußkappe 3 über angewinkelte Stege 20 auffederbar verbunden sind. Dementsprechend sind an dem Haltekörper 1 am Außenrand der trichterförmigen Erweiterung 5 zwei geradlinige Vorsprünge 21 vorgesehen, welche beim Zusammenfügen der Befestigungshülse 2 mit dem Haltekörper 1 nach dem Aufdrücken der Verschlußkappe 3 mit den auffederbaren Stegen 20 derart zusammenwirken, daß bei Anlage der Verschlußkappe 3 auf dem Kopfteil 12 die Rasthaken 19 die Vorsprünge 21 gleichzeitig hintergreifen.

Hierbei ist besonders zu bemerken, daß die Vorsprünge 21 parallel zueinander verlaufen, so daß die Rasthaken 19 nach dem Einrasten nicht nur in axialer Richtung gehalten werden, sondern gleichzeitig auch gegen Verdrehung gesichert sind. Da nun die Verschlußkappe 3 mit der Befestigungshülse 2 über den quadratischen Ansatz 13 seinerseits verdrehsicher gehalten wird, ist die Befestigungshülse 2 gegenüber dem Haltekörper 1 ebenfalls gegen Verdrehung gesichert.

Die Montagefolge ist aus den Figuren 7 bis 12 ersichtlich. Zunächst wird die Befestigungshülse 2 in das Durchgangsloch 4 des Haltekörpers 1 eingeführt, bis das Kopfteil 12 auf der Innenfläche der trichterförmigen Erweiterung 5 aufliegt (Fig. 7). Sodann wird die Werschlußkappe 3, die mit den Kanten 18 am oberen Ende der Rastkanten 15 abreißbar angeformt ist, auf den Ansatz 13 in Richtung der Pfeile "A" aufgedrückt, wobei einerseits die Rastkanten 15 in die Aussparung 17 eintauchen und andererseits die Rasthaken 19 die Vorsprünge 21 hintergreifen. Die Rastkanten 15 befinden sich hierbei im Abstand "s" über den Kanten 18 (Fig. 8).

Sodann wird das fertig vormontierte Befestigungselement (Fig. 9) mit den zu haltenden Rohren 22 oder Kabeln 23 bestückt, welche in die Haltebereiche 6 und 7 eingedrückt werden. Nun wird das Befestigungselement mit der Befestigungshülse 2 vor den an der Trägerplatte 8 befestigten Gewindebolzen 9 gebracht (Figur 10) und mittels eines. in der Zeichnung lediglich angedeuteten Hammers 24 in Richtung des Pfeiles "P" auf den Bolzen 9 geschlagen (Figur 11), bis der Haltekörper 1 mit dem Rand des Trichters 5 auf der Trägerplatte 8 auf liegt (Figur 12).

Will man das Befestigungselement lösen, so müssen, wie aus Figur 13 ersichtlich, die Stege 20 zunächst in Richtung der Pfeile "L" zur Seite gedrückt werden, bis sich die Rasthaken 19 von den Vorsprüngen 21 lösen. Die Verschlußkappe 3 kann nun in Richtung des Pfeiles "B" um den Spalt "s" vom Kopfteil 12 weggezogen werden, bis die Kanten 18 an den Rastkanten 15 anliegen. In dieser Lage haben die Innenflächen 25 der Rasthaken 19 von den Außenflächen 26 der Rastvorsprünge 21 soviel Luft bzw. Abstand "a", daß die Verschlußkappe 3 mit der Befestigungshülse 2 mühelos in Richtung des Pfeiles "D" vom Gewindebolzen 9 runtergedreht werden kann (Figur 14).

Nach dem Lösen des Befestigungselements kann dieses ohne weiteres wiederverwendet werden, indem zunächst die Befestigungshülse 2 wieder in das Durchgangsloch 4 eingeführt und dann die Verschlußkappe 3 mit den Rasthaken 19 auf die Vorsprünge 21 in Richtung der Pfeile "A" aufgedrückt wird (Fig. 15). Das Aufschlagen auf den Gewindebolzen 9 erfolgt dann genau wie bei Figur 11.

Wie aus Figur 16 ersichtlich, kann die Befestigungshülse 2 auch von der anderen Seite in das Durchgangsloch 4 eingeführt werden, und zwar so, daß die öffnungen der Haltebereiche 6 und 7 von der Trägerplatte 8 weggerichtet sind. In diesem Fall kann das Eindrücken der Rohre 22 bzw. Kabelleitungen 23 erfolgen, nachdem die Befestigungselemente auf die Gewindebolzen 9 aufgedrückt sind.

## Patentansprüche

1. Kunststoffbefestigungselement zum Aufdrücken auf einen Gewindebolzen, bestehend aus einem Haltekörper (1) mit einem im montierten Zustand den Bolzen (9) koaxial umgebenden Durchgangsloch (4) sowie aus einer in das Durchgangsloch (4) einsteckbaren Befestigungshülse (2), deren Innenwand (11) zur klemmenden Befestigung am Gewindebolzen (9) ausgebildet ist und die mit einem Kopfteil (12) versehen ist, das sich bei eingedrückter Befestigungshülse (2) auf dem Rand (5) des Durchgangslochs (4) abstützt und zu diesem in axialer Richtung lösbar gehalten wird,
**dadurch gekennzeichnet,** daß
die Befestigungshülse (2) zum Haltekörper (1) im aufgedrückten Zustand mittels sich an Vorsprüngen (21) des Haltekörpers (1) abstützender, radial abstehender Ansätze (19) gegen Verdrehung gesichert ist, wobei auf dem Kopfteil (12) mittig ein Ansatz (13) mit mindestens einer achsparallelen Abflachung (14) angeformt ist und die verdrehsichere Verbindung zwischen Befestigungshülse (2) und Haltekörper (1) durch eine Verschlußkappe (3) bewirkt wird, die mit einer dem Ansatz (13) entsprechenden Aussparung (17) versehen und über Rastmittel (19/21) zum Haltekörper (1) undrehbar festlegbar ist.

2. Befestigungselement nach Anspruch 1, dadurch gekennzeichnet, daß der Ansatz (13) im Querschnitt rechteckig ausgebildet und mit zwei seitlich abstehenden Rastkanten (15) versehen ist, die beim Einführen in die Aussparung (17) nach Passieren eines Engpasses entsprechende, nach innen abgewinkelte Kanten (18) der Verschlußkappe (3) unlösbar hintergreifen, und daß die Verschlußkappe (3) ferner zwei diametral gegenüberliegende, nach innen abstehende, auffederbare Rasthaken (19) besitzt, die bei der Anlage der Verschlußkappe (3) auf dem Kopfteil (12) gleichzeitig mit entsprechenden Vorsprüngen (21), die am Haltekörper (1) nach außen abstehen, zusammenwirken.

3. Befestigungselement nach Anspruch 2, dadurch gekennzeichnet, daß die Rasthaken (19) und die Vorsprünge (21) auf der einen Seite und die Rastkanten (15) und die abgewinkelten Kanten (18) auf der anderen Seite so angeordnet und ausgebildet sind, daß, wenn die Rasthaken (19) bei aufgedrückter Verschlußkappe (3) an den Vorsprüngen (21) einrasten, die Rastkanten (15) die abgewinkelten Kanten (18) gleichzeitig im Abstand "s" hintergreifen, wobei dieser Abstand "s" so bemessen ist, daß beim Lösen der Kappe (3) und Zurückziehen bis zur Anlage der Kanten (18) an den Rastkanten (15) die Innenflächen (25) der Rasthaken (19) von den Außenflächen (26) der Vorsprünge (21) soviel Abstand "a" haben, daß die Verschlußkappe (3) gegenüber den Vorsprüngen (21) frei drehbar ist.

## Claims

1. A plastics fastening element for being pressed onto a screwthreaded pin, comprising a holding body (1) with a through hole (4) which in the assembled condition coaxially surrounds the pin (9) and a fastening sleeve (2) which can be fitted into the through hole (4) and whose inside wall (11) is designed for clamping fastening to the screwthreaded pin (9) and which is provided with a head portion (12) which when the fastening sleeve (2) is pressed into position bears against the edge (5) of the through hole (4) and is held to same releasably in the axial direction, characterised in that the fastening sleeve (2) is prevented from turning relative to the holding body (1) in the pressed-on condition by means of radially protruding projection portions (19) which bear against projections (21) of the holding body (1), wherein a projection portion (13) having at least one flat (14) which is parallel to the axis is formed centrally on the head portion (12) and the non-rotatable connection between the fastening sleeve (2) and the holding body (1) is provided by a locking cap (3) which is provided with an opening (17) corresponding to the projection portion (13) and which can be fixed non-rotatably to the holding body (1) by way of retaining means (19/21).

2. A fastening element according to claim 1 characterised in that the projection portion (13) is of rectangular configuration in cross-section and is provided with two laterally protruding retaining edges (15) which upon being introduced into the opening (17) after passing a constriction non-releasably engage behind corresponding inwardly angled edges (18) of the locking cap (3), and that the locking cap (3) also has two diametrally oppositely disposed, inwardly protruding retaining hooks (19) which can be sprung open and which when the locking cap (3) bears against the head portion (12) co-operate at the same time with corresponding projections (21) which protrude outwardly on the holding body (1).

3. A fastening element according to claim 2 characterised in that the retaining hooks (19) and the projections (21) on the one hand and the retaining edges (15) and the angled edges (18) on the other hand are of such a configuration and arrangement that, when the retaining hooks (19) engage at the projections (21) in the pushed-on position of the locking cap (3), the retaining edges (15) at the same time engage behind the angled edges (18) at the spacing "s", said spacing "s" being of such a size that, when the cap (3) is released and pulled back until the edges (18) bear against the retaining edges (15), the inside surfaces (25) of the retaining hooks (19) are at such a spacing "a" from the outside surfaces (26) of the projections (21) that the locking cap (3) is freely rotatable relative to the projections (21).

## Revendications

1. Organe de fixation en matière plastique destiné à être emmanché par pression sur une tige filetée, se composant d'un élément de retenue (1) comportant un trou débouchant (4) qui, à l'état monté, enserre coaxialement la tige (9) ainsi que d'une douille de fixation (2) destinée à être introduite dans le trou débouchant (4), dont la surface intérieure (11) est profilée de manière à épouser la tige filetée (9) en exerçant en l'occurrence une action de blocage et qui est munie d'une tête (12) qui, lorsque la douille de fixation (2) est emmanchée, prend appui sur le bord (5) du trou débouchant (4) et est maintenue en position par rapport à celui-ci avec la possibilité de pouvoir être ultérieurement dégagée dans le sens axial, **se caractérisant par le fait** que la douille de fixation (2), une fois emmanchée en position, est immobilisée en rotation par rapport à l'élément de retenue (1) par des épaulements (19) formant saillie dans le plan radial, qui prennent appui sur des bossages (21) que comporte l'élément de retenue (1), un épaulement (13), comportant au moins un méplat parallèle à l'axe, venu de moulage, étant en l'occurrence ménagé au centre de la tête (12) et la liaison bloquée en rotation entre la douille de fixation (2) et l'élément de retenue (1) étant en l'occurrence réalisée par une calotte de fermeture (3), qui comporte un évidement (17) correspondant à l'épaulement (13) et qui se bloque en position sous l'action exercée par les organes d'accrochage (19/21) dans des conditions qui l'empêchent de tourner dans l'élément de retenue (1).

2. Organe de fixation suivant la revendication 1, se caractérisant par le fait que l'épaulement (13) a une section rectangulaire et est muni de deux ergots d'accrochage (15) formant saillie latéralement qui, lors de son introduction dans l'évidement (17), après avoir franchi un passage en étranglement, viennent cramponner par derrière, dans des conditions rendant une désolidarisation ultérieure impossible, des arêtes repliées vers l'intérieur en angle droit (18) que comporte en correspondance la calotte de fermeture (3), et que la calotte de fermeture (3) comporte en outre deux ergots d'accrochage (19) diamétralement opposés formant saillie vers l'intérieur, capables de céder par déformation élastique qui, lorsque la calotte de fermeture (3) est appliquée sur la tête (12), réalisent une interaction d'encastrement avec les bossages (21) correspondants formant saillie vers l'extérieur que comporte l'élément de retenue (1).

3. Organe de fixation suivant la revendication 2, se caractérisant par le fait que les ergots d'accrochage (19) et les bossages (21), d'une part, et les arêtes repliées vers l'intérieur en angle droit (18), d'autre part, sont disposés et conçus dans des conditions telles que lorsque les ergots d'accrochage (19), la calotte de fermeture (3) étant appliquée en position, viennent s'imbriquer sur les bossages (21), les arêtes d'accrochage (15) viennent simultanément cramponner par derrière les arêtes repliées en angle droit (18) à une distance "s", cette distance "s" étant en l'occurrence dimensionnée dans des conditions telles que lorsqu'on dégage la calotte (3) et qu'on la tire en arrière jusqu'à ce que les arêtes (18) soient en butée contre les arêtes d'accrochage (15), les faces intérieures (25) des ergots d'accrochage (19) sont dégagées des faces extérieures (26) des bossages (21) dans une proportion "a" telle que la calotte de fermeture (3) peut tourner librement par rapport aux bossages (21).
